# EUROPEAN PATENT APPLICATION

(11) **EP 4 644 610 A1**
(43) Date of publication of application: **05.11.2025**
(21) Application number: 24305694.2
(22) Date of filing: 02.05.2024
(51) Int. Cl.: E02D 3/02, E02D 27/42, E02D 27/52

(54) **A GRAVITY BASED STRUCTURE**

(71) Applicant: TotalEnergies OneTech, 92400 Courbevoie (FR)
(72) Inventor: GENTIL, Frédéric, 92400 Courbevoie (FR)
(74) Representative: Lavoix

(57) **Abstract**

A gravity based structure (12) comprising:
- a supporting structure (20) comprising a central column (22), three or more caissons (24) defining an interior volume (38) and an opening (40), and inclined connecting legs (26),
- a first system for introducing water in at least one of the caissons, and moving the supporting structure from a first equilibrium position, in which the caissons form hulls floating on a body of water (18), to a critical position, in which at least one of the caissons is flooded by water via the opening, the other ones being flooded via the opening as the supporting structure sinks and reaches a second equilibrium position, in which it floats in the body of water,
- a second system for introducing ballasting water into the legs and/or the column and lowering the supporting structure from the second equilibrium position to a rest position on a seabed (16),
- solid ballast intended to at least partly fill the caissons.

## Description

### FIELD

The present invention deals with a gravity based structure intended to lie on a seabed and to support a wind turbine, comprising a supporting structure having caissons.

The invention also deals with an installation comprising such a gravity based structure and a wind turbine, and with a process of installing such a gravity based structure on the seabed.

### BACKGROUND

Offshore wind turbines may be efficiently supported by monopiles in relatively shallow waters. However, monopiles usually require to be lifted and hammered into the seabed, which are costly operations.

In deeper waters, jacket structures, made of steel tubes, <are usually preferred. However, they are costly structures of which anchoring also requires drilling the seabed.

Gravity based structures (GBS) are an alternative that does not require hammering or drilling. They usually simply lie on the seabed. They provide stability thanks to their huge weight. As consequence, they are massive structures, and carrying and installing them is costly. In particular, they require heavy lift vessels, the availability and the capacity of which may be a bottleneck.

Besides, when these huge structures are being sunk, they are temporarily subject to huge hydrostatic pressure forces from the outside water, which requires providing them with thick walls capable of resisting the pressure. This further increases the costs.

An aim of the disclosure is to overcome or reduce the above mentioned issues, by providing a structure intended to support a wind turbine, which does not require hammering into the seabed or drilling the latter, and is less costly than conventional gravity based structures.

### SUMMARY OF THE INVENTION

To this end, the disclosure proposes a gravity based structure intended to lie on a seabed and to support a wind turbine, comprising:
- a supporting structure comprising a central column defining an axis intended to be vertical, the column having an upper extremity intended to be above a body of water and to be connected to the wind turbine, and a lower extremity, the supporting structure further comprising N caissons distributed around the axis, N legs inclined downwards from a median portion of the column and mechanically connecting the median portion to the N caissons, a plurality of members mechanically connecting the lower extremity to the N caissons, each of the N caissons defining an interior volume and an opening allowing access to the interior volume, N being an integer equal to or greater than three,
- a first system adapted for introducing water in at least one of the N caissons,
- a second system adapted for introducing ballasting water into the N legs and/or the column, and
- solid ballast intended to at least partly fill the N caissons,
wherein:
- the supporting structure is adapted for being in a first equilibrium position, in which the N caissons form hulls floating on the body of water, the N legs protruding upwards from the N caissons,
- the first system is adapted for moving the supporting structure from the first equilibrium position to a critical position, in which at least one of the N caissons is adapted for being flooded by water from the body of water via the opening, the other of the caissons being adapted for being flooded via the opening by water from the body of water as the supporting structure sinks into the body of water, the supporting structure being adapted for reaching a second equilibrium position, in which the supporting structure floats in the body of water above the seabed,
- the second system is adapted for progressively lowering the supporting structure from the second equilibrium position to a rest position, in which the N caissons rest on the seabed, and
- the N caissons are adapted for receiving the solid ballast.

In other embodiments, the gravity based structure may comprise one or several of the following features, taken in isolation or any technically feasible combination:
- N is equal to three;
- said plurality of members comprises N members extending radially with respect to the axis between the lower extremity and the N caissons respectively;
- the members of said plurality are perpendicular to the axis;
- each of the N caissons comprises steel and/or concrete;
- each of the N caissons comprises a bottom wall adapted for lying on the seabed in the rest position, the N legs being fixed respectively to the bottom wall of each of the N caissons, each of the N legs entering the interior volume via the opening;
- each of the N legs has a main part fixed to the median portion of the column, and a lower part fixed to the bottom wall of one of the caissons and forming an elbow with the main part;
- each of the N caissons comprises reinforcement members connected to the lower part and to the bottom wall, the reinforcement members being distributed around the lower part;
- each of the N caissons comprises lateral walls extending upwards from the bottom wall and defining the opening;
- the lateral walls form faces parallel to the axis;
- each of the N caissons has six lateral walls analogous to each other;
- each of the N caissons comprises a plurality of reinforcements fixed on an inner side of each of the lateral walls and orthogonal to the axis, the reinforcements forming several groups of successive reinforcements, each of the groups surrounding the interior volume; and
- the column comprises a frustoconical lower portion flaring upwards, the median portion being cylindrical.

The disclosure also proposes an assembly comprising:
- a gravity based structure as described above, the axis being vertical, the solid ballast at least partly filling the N caissons, the supporting structure being in the rest position, and
- a wind turbine supported by the gravity based structure, the upper extremity of the column being above the body of water and being connected to the wind turbine.

The disclosure also proposes a process of installing a gravity based structure on a seabed, the gravity based structure being intended to support a wind turbine, the process comprising:
- obtaining a supporting structure comprising a central column defining an axis intended to be vertical, the column having an upper extremity intended to be above a body of water and to be connected to the wind turbine, and a lower extremity, the supporting structure further comprising N caissons distributed around the axis, N legs inclined downwards from a median portion of the column and mechanically connecting the median portion to the N caissons, a plurality of members mechanically connecting the lower extremity to the N caissons, each of the N caissons defining an interior volume and an opening allowing access to the interior volume, N being an integer equal to or greater than three,
- putting the supporting structure in a first equilibrium position, in which the N caissons form hulls floating on the body of water, the N legs protruding upwards from the N caissons,
- introducing water from the body of water in at least one of the N caissons using a first system in order to move the supporting structure from the first equilibrium position to a critical position, in which water from the body of water floods said at least one of the N caissons via the opening, the other of the N caissons being flooded by water from the body of water via their opening while the supporting structure sinks into the body of water, the supporting structure reaching a second equilibrium position, in which the supporting structure floats in the body water above the seabed,
- introducing ballasting water into the N legs and/or the column using a second system, in order to progressively lower the supporting structure from the second equilibrium position to a rest position, in which the N caissons rest on the seabed, and
- introducing a solid ballast into each of the N caissons.

### BRIEF DESCRIPTION OF THE DRAWINGS

The disclosure and its advantages will be better understood upon reading the following description, given solely by way of example and with reference to the appended drawings, in which:
- Figure 1 is a perspective partial view of an assembly according to the disclosure, the gravity based structure lying on the seabed,
- Figure 2 is a perspective view of one of the caissons of the gravity based structure shown in Figure 1,
- Figure 3 is a series of four side views of a supporting structure of the gravity based structure shown in Figures 1 and 2, the four views, from left to right, representing four successive positions of the supporting structure during installation, and
- Figure 4 is another series of four side views of the supporting structure shown in Figures 1 to 3, the four views, from left to right, representing four successive positions occupied after those shown in Figure 3.

### DETAILED DESCRIPTION

### Assembly

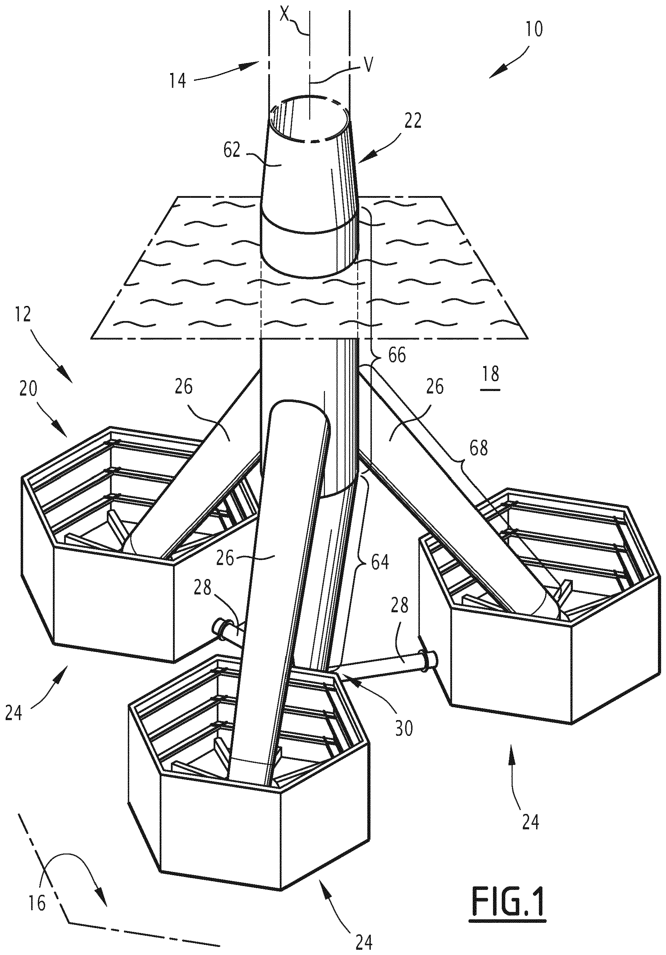

An assembly 10 according to the disclosure will now be described with respect to Figure 1.

The assembly 10 is fully installed in Figure 1.

The assembly 10 comprises a gravity based structure 12, and a wind turbine 14 (partially shown) supported by the gravity based structure.

### Gravity based structure

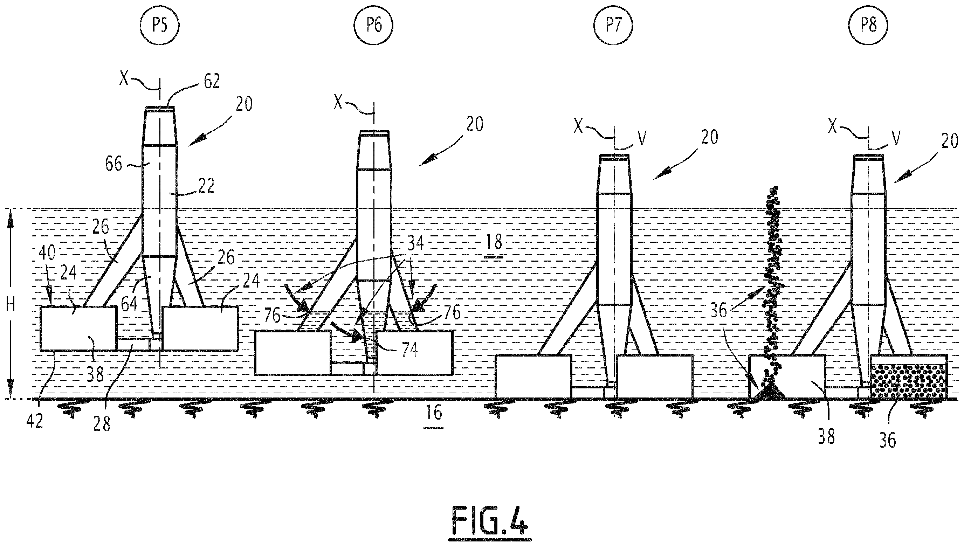

The gravity based structure 12 lies on a seabed 16 and is surrounded by a body of water 18 that may be an ocean, a sea or a lake, with an average depth H (Figure 4) advantageously smaller than 60 meters where the gravity based structure 12 is installed.

The gravity based structure 12 has a mass for example greater than 5000 tonnes (one tonne being equal to 1000 kg).

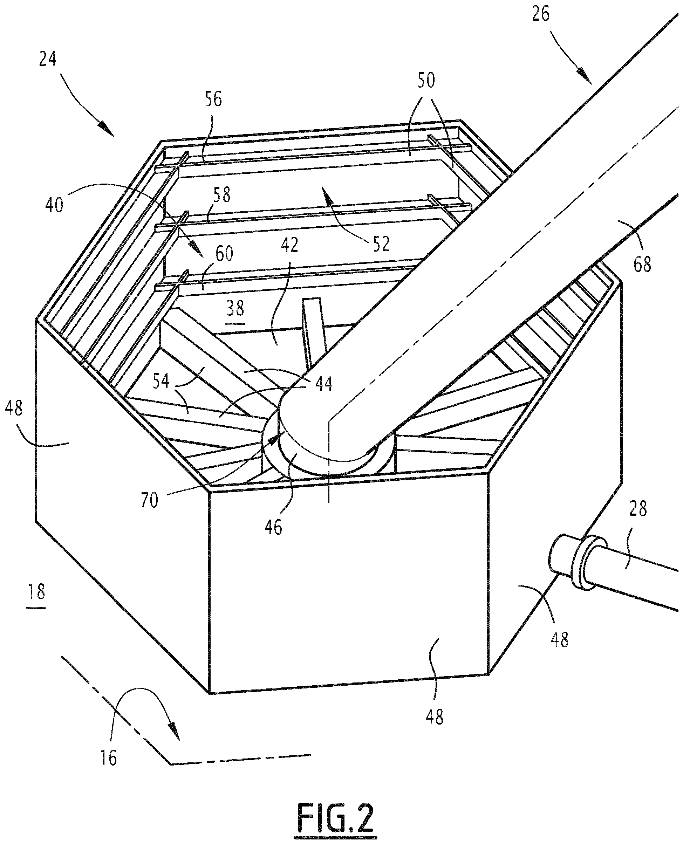

The gravity based structure 12 comprises a supporting structure 20 (Figure 1), the supporting structure having a central column 22 defining an axis X intended to be vertical, N caissons 24 (Figures 1 and 2) distributed around the axis X, N legs 26, and a plurality of members 28 mechanically connecting a lower extremity 30 of the column to the N caissons 24.

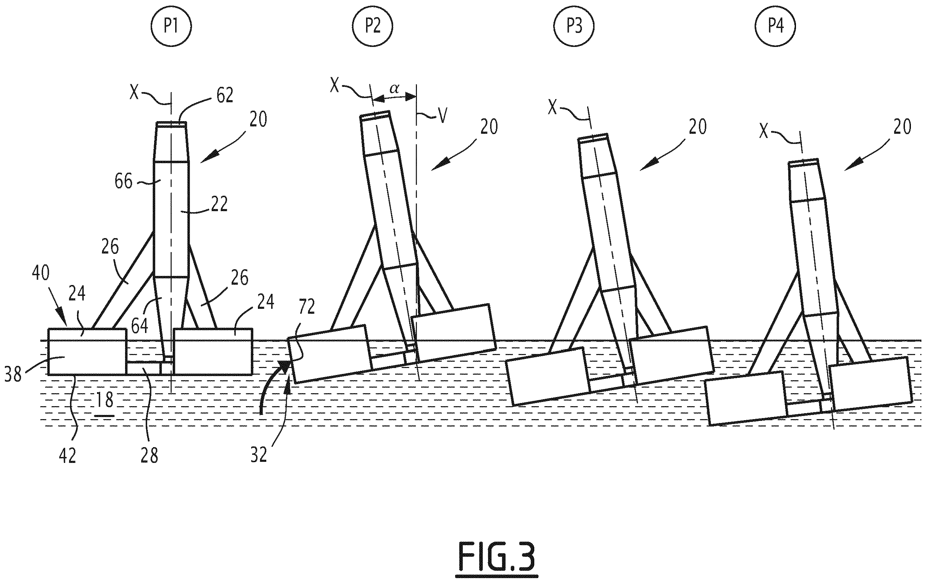

The gravity based structure 12 comprises a first system 32 (Figure 3) adapted for introducing water, for example from the body of water 18, in at least one of the N caissons 24, and a second system 34 (Figure 4) adapted for introducing ballasting water into the N legs 26 and/or the column 22.

The gravity based structure 12 comprises solid ballast 36 (not shown in Figure 1 for clarity, but in Figure 4) at least partly filling the N caissons 24.

N is an integer equal to or greater than three, preferably equal to three, as in the example shown in Figure 1.

According to variants (not shown), N may be equal to four, five, or six.

### Supporting structure

The supporting structure 20 is adapted for being in a first equilibrium position P1 (Figure 3 in the left), in which the N caissons 24 form hulls floating on the body of water 18, the N legs 26 protruding upwards from the N caissons 24.

The supporting structure 20 is adapted for sinking into the body of water 18 (positions P2 to P4 in Figure 3) in order to reach a second a second equilibrium position P5 (Figure 4), in which the supporting structure 20 floats in the body water 18 above the seabed 16. In the second equilibrium position P5, the caissons 24, the legs 26 and the column 22 form a single hull.

The supporting structure 20 is intended for being lowered (position P6 in Figure 4) from the second equilibrium position P5 to a rest position P7, in which the N caissons 24 rest on the seabed 16.

### Caissons

The N caissons 24 are advantageously analogous to each other structurally.

Each of the caissons defines an interior volume 38 (Figure 2) and an opening 40 allowing access to the interior volume 38.

The caissons 24 are adapted for being flooded by water from the body of water 18 via the opening 40. At least one of the caissons 24 is adapted for being flooded when the supporting structure 20 is in a critical position P2. The other of the caissons 24 are adapted for being flooded as the supporting structure 20 sinks into the body of water 18 (position P3).

The caissons 24 are adapted for receiving the solid ballast 36, advantageously via the opening 40 (position P8 in Figure 4).

Each of the caissons 24 for example comprises steel and/or concrete. Advantageously, each of the caissons 24 comprises more than 90wt% of steel or concrete, and is in a particular embodiment made of steel or made of concrete.

Advantageously, each of the caissons 24 comprises a bottom wall 42 adapted for lying on the seabed 16 in the rest position P7, the legs 26 being fixed respectively to the bottom wall 42 of each of the N caissons 24, each of the legs 26 entering the interior volume 38 via the opening 40.

Each of the caissons 24 advantageously comprises reinforcement members 44 connected to a lower part 46 of one of the legs 26 and for example to the bottom wall 42, the reinforcement members 44 being distributed around the lower part 46.

For example, each of the caissons 24 comprises lateral walls 48 extending upwards from the bottom wall 42 and defining the opening 40. In the example shown, each of the N caissons 24 has six lateral walls 48 analogous to each other.

Advantageously, each of the N caissons 24 comprises a plurality of reinforcements 50 fixed on an inner side 52 of the lateral walls 48 with respect to the interior volume 38.

The lateral walls 48 advantageously form faces that are parallel to the axis X.

In the example, the opening 40 is defined by the lateral walls 48. In other words, the caissons 24 do not have an upper wall and the opening (40) extends until the lateral walls 48 perpendicularly to the axis X.

In variants (not shown), the opening 40 may have a smaller extension. However, the opening 40 is designed so that each of the caissons 24 can be flooded rapidly via the opening once the critical position P2 is reached, and so that the solid ballast 36 can advantageously be introduced in the interior volume 38 via the opening.

The reinforcement members 44 for example comprise plates 54 or beams extending radially from the lower part 46 of one of the legs 26.

The plates 54 are for example vertical when the supporting structure 20 is in the rest position.

The reinforcements 50 are for example orthogonal to the axis X, and form several groups 56, 58, 60 of successive reinforcements, each of the groups fully surrounding the interior volume 38.

### Other elements of supporting structure

Opposite the lower extremity 30 vertically, the column 22 has an upper extremity 62 intended to remain above the body of water 18 and to be connected to the wind turbine 14.

In the example, the column 22 comprises a frustoconical lower portion 64 flaring upwards from the lower extremity 30 along the axis X, and a median portion 66 for example cylindrical.

The N legs 26 are inclined downwards from the median portion 66 of the column 26 and mechanically connect the median portion 66 to the N caissons 24.

For example, each of the N legs 26 has a main part 68 fixed to the median portion 66 of the column 22.

The lower part 46 is advantageously fixed to the bottom wall 42 of one of the caissons 24, and not to an upper wall of the caissons. For example, each of the legs 26 enters the interior volume 38 via the opening 40. Advantageously, the lower part 46 forms an elbow 70 with the main part 68.

The plurality of members 28 for example comprises N members extending radially with respect to the axis X between the lower extremity 30 and the N caissons 24 respectively. Advantageously, the members 28 of said plurality are perpendicular to the axis X.

### Other elements of the gravity based structure

The first system 32 is adapted for moving the supporting structure 20 from the first equilibrium position P1 to the critical position P2, for example via successive pre-flooding positions (between position P1 and position P2).

In the example, the first system 32 (Figure 3) adapted for introducing water in only one of the N caissons 24, and the pre-flooding positions are defined by increasing values of an angle α defined by the axis X and a vertical direction V, and the critical position P2 is defined by a critical value of the angle α.

As a variant (not shown), the first system 32 is adapted for introducing water into several of the N caissons 24. In that case, the angle α may not increase, or may increase less.

The first system 32 for example comprises a controlled valve 72 or any equivalent system adapted for admitting water from the body of water 18 into the interior volume 38 of one of the caissons 24.

The second system 34 is adapted for progressively lowering the supporting structure 20 from the second equilibrium position P5 to the rest position P7.

The second system 34 for example comprises controlled valves 74, 76 or any equivalent system adapted for admitting water from the body of water 18 into the column 22 and/or the legs 26.

In a particular embodiment, the second system 34 for example is adapted for controlling an internal pressure in the column 22 and/or the legs 26 in order to monitor an amount of water entering the legs and/or the column.

The solid ballast 36 is for example suitable for being poured into the interior volume 38, as shown in Figure 4.

As a variant, the solid ballast 36 is adapted for being injected into the interior volume 38. For example, the solid ballast 36 is sand, and a mix of water and the solid ballast can be injected.

### Process of installing the gravity based structure

The installation of the gravity based structure 12 on the seabed 16 will now be described with reference to Figures 3 and 4 in order to illustrate a process according to the disclosure.

Initially, the supporting structure 20 is obtained, the wind turbine 14 being not connected to the supporting structure 20 and the solid ballast 36 being not in the caissons 24.

The supporting structure 20 is put in the first equilibrium position P1. The N caissons 24 float on the body of water 18. For example the interior volume 38 does not contain any water.

Then water is introduced in one of the caissons 24 using the first system 32 in order to move the supporting structure 20 from the first equilibrium position P1 to the critical position P2. In the example, the supporting structures 20 occupies successive pre-flooding positions (between position P1 and P2) corresponding to increasing values of the angle α.

In the example, the angle α grows until it reaches the critical value defining the critical position P2.

In variants (not shown), the first system 32 may move the supporting structure 20 toward the critical position P2 by introducing water into more than one of the caissons 24, in particular in order to minimize the critical value of the angle α.

In the critical position P2, water from the body of water 18 floods said caisson via its opening 40. The supporting structure 20 starts sinking into the body of water 18 and at least another of the caissons 24 starts being rapidly flooded via its opening 40 (position P3) and soon all of the caissons 24 are flooded via their opening 40 (position P4). The supporting structure 20 may oscillate and then stabilizes in the second equilibrium position P5.

Ballasting water is introduced into the N legs 26 and/or the column 22 using the second system 34. The supporting structure 20 is progressively lowered from the second equilibrium position to the rest position P7.

In the rest position, the column 22 has its upper extremity 62 above the body of water 18.

The solid ballast 36 is introduced into each of the N caissons 24, for example by pouring it via the opening 40.

The wind turbine 14 may then be connected to the upper extremity 62 of the column 22.

### Advantages

Thanks to the above described features, the gravity based structure 12 does not require hammering into the seabed 16 or drilling the latter, and is less costly than conventional gravity based structures.

Indeed, the supporting structure 20 is rather simple to produce, and however mechanically resistant.

The supporting structure 20 is easily carried by flotation in the first position P1. The supporting structure 20 is easily sunk using the first system 32 and the opening 40 of the caissons 24, without the use of a heavy lift vessel or crane, and the supporting structure naturally reaches the second equilibrium position P5.

The supporting structure 20 is then smoothly lowered to its rest position P7 using the second system 34.

Finally, the solid ballast 36 is easily introduced in the interior volume 38 of the caissons 24 via the opening 40, for example by pouring or injection.

The quick flooding of the caissons 24 prevents the caissons from being subject to huge hydrostatic pressure, which allows reducing the width of their walls.

Connecting the legs 26 to the bottom wall 42 also decreases the constraints in the caissons 24.

## Claims

1. A gravity based structure (12) intended to lie on a seabed (16) and to support a wind turbine (14), comprising:
- a supporting structure (20) comprising a central column (22) defining an axis (X) intended to be vertical, the column (22) having an upper extremity (62) intended to be above a body of water (18) and to be connected to the wind turbine (14), and a lower extremity (30), the supporting structure (20) further comprising N caissons (24) distributed around the axis (X), N legs (26) inclined downwards from a median portion (66) of the column (22) and mechanically connecting the median portion (66) to the N caissons (24), a plurality of members (28) mechanically connecting the lower extremity (30) to the N caissons (24), each of the N caissons (24) defining an interior volume (38) and an opening (40) allowing access to the interior volume (38), N being an integer equal to or greater than three,
- a first system (32) adapted for introducing water in at least one of the N caissons (24),
- a second system (34) adapted for introducing ballasting water into the N legs (26) and/or the column (22), and
- solid ballast (36) intended to at least partly fill the N caissons (24),
wherein:
- the supporting structure (20) is adapted for being in a first equilibrium position (P1), in which the N caissons (24) form hulls floating on the body of water (18), the N legs (26) protruding upwards from the N caissons (24),
- the first system (32) is adapted for moving the supporting structure (20) from the first equilibrium position (P1) to a critical position (P2), in which at least one of the N caissons (24) is adapted for being flooded by water from the body of water (18) via the opening (40), the other of the caissons (24) being adapted for being flooded via the opening (40) by water from the body of water (18) as the supporting structure (20) sinks into the body of water (18), the supporting structure (20) being adapted for reaching a second equilibrium position (P5), in which the supporting structure (20) floats in the body of water (18) above the seabed (16),
- the second system (34) is adapted for progressively lowering the supporting structure (20) from the second equilibrium position (P5) to a rest position (P7), in which the N caissons (24) rest on the seabed (16), and
- the N caissons are adapted for receiving the solid ballast.

2. The gravity based structure (12) according to claim 1, wherein N is equal to three.

3. The gravity based structure (12) according to claim 1 or 2, wherein said plurality of members (28) comprises N members extending radially with respect to the axis (X) between the lower extremity (30) and the N caissons (24) respectively.

4. The gravity based structure (12) according to any one of claims 1 to 3, wherein the members (28) of said plurality are perpendicular to the axis (X).

5. The gravity based structure (12) according to any one of claims 1 to 4, wherein each of the N caissons (24) comprises steel and/or concrete.

6. The gravity based structure (12) according to any one of claims 1 to 5, wherein each of the N caissons (24) comprises a bottom wall (42) adapted for lying on the seabed (16) in the rest position (P7), the N legs (26) being fixed respectively to the bottom wall (42) of each of the N caissons (24), each of the N legs (26) entering the interior volume (38) via the opening (40).

7. The gravity based structure (12) according to claim 6, wherein each of the N legs (26) has a main part (68) fixed to the median portion (66) of the column (22), and a lower part (46) fixed to the bottom wall (42) of one of the caissons (24) and forming an elbow (70) with the main part (68).

8. The gravity based structure (12) according to claim 7, wherein each of the N caissons (24) comprises reinforcement members (44) connected to the lower part (46) and to the bottom wall (42), the reinforcement members (44) being distributed around the lower part (46).

9. The gravity based structure (12) according to any one of claims 6 to 8, wherein each of the N caissons (24) comprises lateral walls (48) extending upwards from the bottom wall (42) and defining the opening (40).

10. The gravity based structure (12) according to claim 9, wherein the lateral walls (48) form faces parallel to the axis (X).

11. The gravity based structure (12) according to claim 9 or 10, wherein each of the N caissons (24) has six lateral walls (48) analogous to each other.

12. The gravity based structure (12) according to any one of claims 9 to 11, wherein each of the N caissons (24) comprises a plurality of reinforcements (50) fixed on an inner side (52) of each of the lateral walls (48) and orthogonal to the axis (X), the reinforcements (50) forming several groups (58, 60, 62) of successive reinforcements, each of the groups (58, 60, 62) surrounding the interior volume (38).

13. The gravity based structure (12) according to any one of claims 1 to 12, wherein the column (22) comprises a frustoconical lower portion (64) flaring upwards, the median portion (66) being cylindrical.

14. An assembly (10) comprising:
- a gravity based structure (12) as described by any one of claims 1 to 13, the axis (X) being vertical, the solid ballast (36) at least partly filling the N caissons (24), the supporting structure (20) being in the rest position (P7), and
- a wind turbine (14) supported by the gravity based structure (12), the upper extremity (62) of the column (22) being above the body of water (18) and being connected to the wind turbine (14).

15. A process of installing a gravity based structure (12) on a seabed (16), the gravity based structure (12) being intended to support a wind turbine (14), the process comprising:
- obtaining a supporting structure (20) comprising a central column (22) defining an axis (X) intended to be vertical, the column (22) having an upper extremity (62) intended to be above a body of water (18) and to be connected to the wind turbine (14), and a lower extremity (30), the supporting structure (20) further comprising N caissons (24) distributed around the axis (X), N legs (26) inclined downwards from a median portion (66) of the column (22) and mechanically connecting the median portion (66) to the N caissons (24), a plurality of members (28) mechanically connecting the lower extremity (30) to the N caissons (24), each of the N caissons (24) defining an interior volume (38) and an opening (40) allowing access to the interior volume (38), N being an integer equal to or greater than three,
- putting the supporting structure (20) in a first equilibrium position (P1), in which the N caissons (24) form hulls floating on the body of water (18), the N legs (26) protruding upwards from the N caissons (24),
- introducing water from the body of water (18) in at least one of the N caissons (24) using a first system (32) in order to move the supporting structure (20) from the first equilibrium position (P1) to a critical position (P2), in which water from the body of water (18) floods said at least one of the N caissons (24) via the opening (40), the other of the N caissons (24) being flooded by water from the body of water (18) via their opening (40) while the supporting structure (20) sinks into the body of water (18), the supporting structure (20) reaching a second equilibrium position (P5), in which the supporting structure (20) floats in the body water (18) above the seabed (16),
- introducing ballasting water into the N legs (26) and/or the column (22) using a second system (34), in order to progressively lower the supporting structure (20) from the second equilibrium position (P5) to a rest position (P7), in which the N caissons (24) rest on the seabed (16), and
- introducing a solid ballast (36) into each of the N caissons (24).
